# EUROPÄISCHE PATENTSCHRIFT

(11) **EP 2 935 049 B1**
(45) Veröffentlichungstag und Bekanntmachung des Hinweises auf die Patenterteilung: **23.11.2016**
(21) Anmeldenummer: 13811383.2
(22) Anmeldetag: 13.12.2013
(51) Int. Cl.: B65D 90/00, H01F 38/14, H02J 5/00

(54) **LAGERSYSTEM MIT OBJEKTEN, INSBESONDERE CONTAINER, UND SPANNUNGSVERSORGUNGSEINHEIT FÜR EIN SOLCHES LAGERSYSTEM**
STORAGE SYSTEM WITH OBJECTS, IN PARTICULAR CONTAINERS, AND VOLTAGE SUPPLY UNIT FOR SUCH A SYSTEM
SYSTÈME DE STOCKAGE AVEC DES OBJETS, NOTAMMENT DES CONTENEURS, ET UNITÉ D'ALIMENTATION EN TENSION POUR UN TEL SYSTÈME

(30) Priorität: 21.12.2012 DE 102012025151
(43) Veröffentlichungstag der Anmeldung: 28.10.2015
(73) Patentinhaber: SEW-EURODRIVE GmbH & Co. KG, 76646 Bruchsal (DE)
(72) Erfinder: JUNGINGER, Alexander, 75196 Remchingen-Wilferdingen (DE); SCHÖNUNG, Frank, 76676 Graben-Neudorf (DE); MANZ, Friedrich, 76703 Kraichtal-Münzesheim (DE); KÖVARI, Lars, 76351 Linkenheim-Hochstetten (DE); SCHMIDT, Josef, 76676 Graben-Neudorf (DE); GRIMM, Thilo, 28329 Bremen (DE)
(86) Internationale Anmeldenummer: PCT/EP2013/003778
(87) Internationale Veröffentlichungsnummer: WO 2014/095016

(56) Entgegenhaltungen:
- EP-A1- 2 400 513
- WO-A1-2013/027761
- DE-A1-102008 019 964
- FR-A1- 2 639 038
- JP-A- H08 198 383
- JP-A- 2001 254 113
- JP-A- 2011 205 780

## Beschreibung

Die Erfindung betrifft ein Lagersystem mit Objekten, insbesondere Container, und eine Spannungsversorgungseinheit für ein solches Lagersystem. Es ist allgemein bekannt, dass in Lagern, beispielsweise Hochregallagern, Objekte einlagerbar und auslagerbar sind. Insbesondere werden Container in Hafenanlagen aufeinander gestapelt und somit ein Lager gebildet.

Aus der JP H08 198 383 A ist ein Kühlcontainer bekannt.

Aus der JP 2011 205 780 A ist ein Regallager bekannt.

Aus der JP 2001 254 113 A ist ein Magnethalter bekannt.

Aus der EP 2 400 513 A1 ist eine magnetische Abschirmung bekannt.

Aus der FR 2 639 038 A1 ist ein Regal bekannt.

Aus der DE 10 2008 019 964 A1 ist ein mobiler Frachtbehälter mit induktiver Energieversorgung bekannt.

Aus der WO 2013/027761 A1 ist ein induktives Beladesystem für einen Container bekannt.

Der Erfindung liegt daher die Aufgabe zugrunde, ein vollautomatisches Lagersystem weiterzubilden, wobei Menschen nicht zugangsberechtigt sind.

Erfindungsgemäß wird die Aufgabe bei dem Lagersystem mit Objekten, insbesondere
Container, nach den in Anspruch 1 und bei der Spannungsversorgungseinheit für ein solches Lagersystem, nach den in Anspruch 6 angegebenen Merkmalen gelöst.

Wichtige Merkmale der Erfindung bei dem Lagersystem mit Objekte, insbesondere Container, sind, das das Lagersystem Lagerplätze für die Objekte, insbesondere für die ein- und/oder auszulagernden Objekte aufweist,
wobei an einem oder mehreren Lagerplätzen jeweils ein Primärleiter angeordnet ist, insbesondere also der Primärleiter stationär angeordnet ist,
wobei an wenigstens einem der Objekt eine Spannungsversorgungseinheit lösbar verbunden ist, welche eine Sekundärwicklung aufweist, die mit dem Primärleiter induktiv koppelbar ist,
wobei das Objekt einen elektrischen Verbraucher, insbesondere Kühlaggregat, aufweist,
wobei der elektrische Verbraucher aus der Spannungsversorgungseinheit elektrisch versorgt ist.

Von Vorteil ist dabei, dass die Spannungsversorgungseinheit auf einer ferromagnetischen Fläche lösbar verbindbar ist, ohne dass Schrauben oder Klebstoff notwendig ist, also zerstörungsfrei. Darüber hinaus ist ein Zuführen von Energie mittels berührungsloser induktive Übertragung elektrischer Leistung ermöglicht. Somit entfällt ein Steckverbinden zum stationären Anlagenteil hin und das Objekt samt Spannungsversorgungseinheit ist von einem FTS oder AGV an seinen vorgesehenen Lagerplatz bringbar, wo dann die induktive Übertragung bereit steht. Bei der induktiven Ankopplung sind Abweichungen von der Ideallage nur gering kritisch, da die induktive Energieübertragung resonant erfolgt. Aufgrund dieser Resonanten Übertragung ist eine gewisse Unempfindlichkeit gegen Abweichungen aus der Ideallage heraus vorhanden. Das AGV muss also das Objekt im Lagerplatz nur mit einer Genauigkeit von etwa einem Zentimeter oder bis zu fünf Zentimetern positionieren. Die induktive Übertragung ermöglicht auch den Einsatz im Außen- oder Nassbereich und bietet eine galvanische Trennung. Auch für den explosionsgeschützten Beriech ist somit eine gute Eignung vorhanden.

Bei einer vorteilhaften Ausgestaltung ist der elektrische Verbraucher mittels einer Steckverbindung, insbesondere Drehstrom-Steckverbindung, insbesondere aufweisend ein Steckverbinderteil und ein entsprechendes Gegensteckverbinderteil, mit der Spannungsversorgungseinheit elektrisch verbunden ist. Von Vorteil ist dabei, dass die Steckverbindung an einem andere Ort als an dem Lagerplatz steckbar ist. Somit ist es ermöglicht, dass
- das AGV den Container zunächst aufnimmt,
- dann an eine Position fährt, wo menschliche Bediener die Steckverbindung zwischen dem elektrischen Verbraucher und der Spannungsversorgungseinheit bewirken
- und dann den Container an dem Lagerplatz einlagert.

Bei einer vorteilhaften Ausgestaltung weist das Objekt ein Gehäuseteil aus einem ferromagnetischen Werkstoff, insbesondere Stahl, auf,
wobei die Spannungsversorgungseinheit am Gehäuseteil lösbar verbunden ist. Von Vorteil ist dabei, dass ein magnetisches Verbinden, also ein Anheften mittels Dauermagnet, ermöglicht ist. Somit ist ein einfaches lösbares Verbinden ermöglicht.

Bei der Erfindung weist die Spannungsversorgungseinheit einen betätigbaren, insbesondere schaltbaren, Magnethalter auf,
insbesondere wobei der Magnethalter zwei Dauermagnete aufweist, deren Relativposition abhängig von der Stellung eines Betätigungselements, insbesondere Schalthebels, veränderbar ist,
Von Vorteil ist dabei, dass ein magnetisches lösbares Verbinden ausführbar ist, insbesondere vollautomatisch. Alternativ ist auch ein Anhängen an den Container mittels eines Halteblechs vollautomatisch ausführbar.

Bei der Erfindung weist die Spannungsversorgungseinheit ein Abschirmteil auf, welches zwischen der Sekundärwicklung und dem Magnethalter angeordnet ist und/oder welches zwischen einem Ferritkern der Sekundärwicklung und dem Magnethalter angeordnet ist,
wobei das Abschirmteil zumindest einen Teil des vom Magnethalter, insbesondere von dessen Dauermagneten, ausgehenden Magnetflusses von der Sekundärwicklung weglenkt oder ablenkt. Von Vorteil ist dabei, dass die Ferritkerne der Sekundärwicklung nicht in Sättigung gehen und somit ungestört das von dem Primärleiter erzeugte Wechselmagnetfeld vom Primärleiter aus gesehen hinter den Wicklungen der Sekundärwicklung herumleiten.

Bei der Erfindung weist das Abschirmteil
- einen Ferritbereich und
- einen weiteren Bereich, der nicht magnetisch, insbesondere also amagnetisch, diamagnetisch, paramagnetisch, ist und/oder aus Kunststoff und/oder aus Aluminium gefertigt ist, auf,
wobei der Ferritbereich zwischen dem weiteren Bereich und dem Magnethalter angeordnet ist, insbesondere also näher angeordnet ist am Magnethalter als der weitere Bereich. Von Vorteil ist dabei, dass ein Ablenken des von den Dauermagneten erzeugten Magnetflusses in einfacher Weise ermöglicht ist.

Bei einer vorteilhaften Ausgestaltung weist die Spannungsversorgungseinheit eine elektronische Schaltung auf, welcher die in der Sekundärwicklung induzierte Spannung zugeführt wird,
wobei die elektronische Schaltung eine Wechselspannung, insbesondere eine einer Versorgungsnetzspannung entsprechende Wechselspannung, zur Verfügung stellt, insbesondere wobei die Wechselspannung eine Frequenz von 50 Hz oder 60 Hz aufweist, insbesondere wobei die Wechselspannung einen Effektivwert zwischen 200 Volt und 260 Volt oder zwischen 100 Volt und 120 Volt aufweist. Von Vorteil ist dabei, dass der elektrische Verbraucher eine übliche einphasige Wechselspannungsversorgung oder eine Drehspannungsversorgung bereit gestellt bekommt. Somit sind keine besonderen Maßnahmen am Objekt oder am elektrischen Verbraucher notwendig. Anstatt einer Netzsteckdose wird das an einem Endbereich eines Kabels vorgesehene Gegensteckverbinderteil in das entsprechende Steckverbinderteil steckverbunden. Bei einer vorteilhaften Ausgestaltung ist der Lagerplatz in einem Modul angeordnet, insbesondere auf hierfür vorgesehenen Auflagebereichen des Moduls,
wobei das Modul einen Verfahrflächenabschnitt und darauf angeordnete Säulen aufweist, so dass ein Lager aus Modulen gleicher Art zusammensetzbar ist, indem auf Säulen eines ersten Moduls ein Verfahrflächenabschnitt eines anderen Moduls aufsetzbar ist. Von Vorteil ist dabei, dass ein modularer Aufbau des Lagers ermöglicht ist.

Wichtige Merkmale bei der Spannungsversorgungseinheit für Ein Lagersystem sind, dass die Spannungsversorgungseinheit mit einem Objekt des Lagersystems mittels eines schaltbaren Magnethalters der Spannungsversorgungseinheit lösbar verbindbar ist,
wobei die Spannungsversorgungseinheit eine Sekundärwicklung und einen Spulenkern umfassende Sekundärspule aufweist, die mit einem Primärleiter induktiv koppelbar ist,
wobei einer elektronischen Schaltung der Spannungsversorgungseinheit die in der Sekundärwicklung induzierte Spannung zugeführt wird und daraus eine Versorgungsspannung für einen elektrischen Verbraucher, insbesondere Kühlaggregat, des Objekts erzeugt wird,
wobei die Versorgungsspannung an einem Steckverbinderteil der Spannungsversorgungseinheit bereit gestellt ist,
insbesondere so dass der elektrische Verbraucher aus der Spannungsversorgungseinheit elektrisch versorgbar ist,
wobei zwischen Magnethalter und Sekundärwicklung ein Abschirmteil der Spannungsversorgungseinheit angeordnet ist. Von Vorteil ist dabei, dass die Spannungsversorgungseinheit magnetisch lösbar verbindbar ist. Sie ist sozusagen rucksackartig einem Container verbindbar und ermöglicht ein induktives Versorgen aus einem Primärleiter, dem ein Wechselstrom eingeprägt wird und der somit eine Stromquelle darstellt. Zum elektrischen Verbraucher hin weist die Spannungsversorgungseinheit jedoch ein Spannungsquellenverhalten auf.

Bei einer vorteilhaften Ausgestaltung lenkt das Abschirmteil den von Dauermagneten des Magnethalters erzeugten Fluss ab von dem Spulenkern, insbesondere Ferritkern, der Sekundärspule. Von Vorteil ist dabei, dass Sättigung des Ferritkerns der Sekundärspule vermeidbar ist.

Weitere Vorteile ergeben sich aus den Unteransprüchen.

Die Erfindung wird nun anhand von Abbildungen näher erläutert:
In der Figur 1 ist ein schematischer Aufbau eines erfindungsgemäßen Systems gezeigt, wobei ein Spannungsversorgungseinheit an einem Container befestigt ist.
In der Figur 2 ist die Spannungsversorgungseinheit in Schrägansicht aus einer ersten Blickrichtung dargestellt.
In der Figur 3 ist die Spannungsversorgungseinheit in Schrägansicht aus einer anderen Blickrichtung dargestellt.
In der Figur 4 ist der Container 3 in einem Modul gelagert gezeigt, wobei das Modul Primärleiter 40 zur berührungslosen und/oder induktiven Versorgung der Spannungsversorgungseinheit aufweist..
In der Figur 5 ist eine Seitenansicht auf den durch die Spannnungsversorgungseinheit versorgten Container 3 gezeigt.

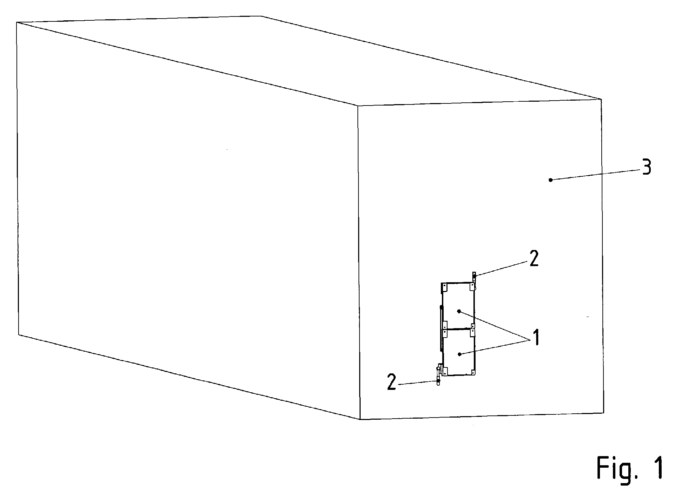

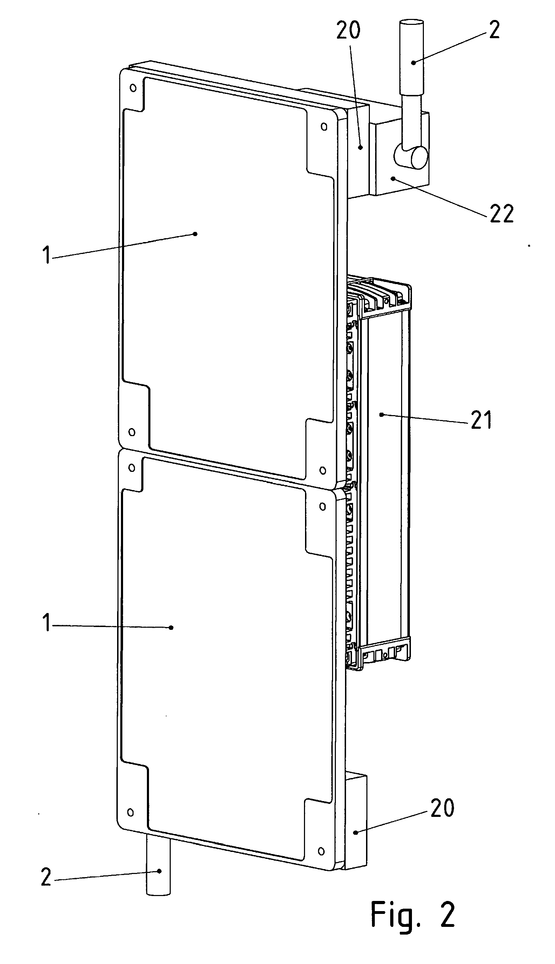

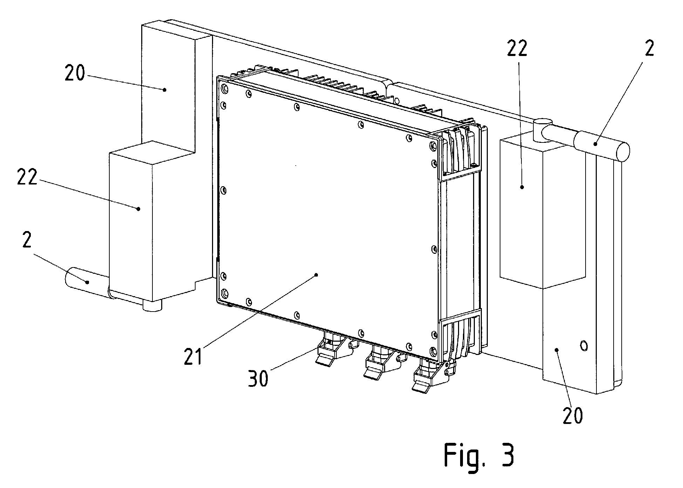

Wie in Figur 1 zusammen mit den Figuren 2 und 3 gezeigt, ist die Spannungsversorgungseinheit am Container befestigbar. Hierzu weist die Spannungsversorgungseinheit eine elektronische Schaltung 21 auf, die mit zwei Sekundärwicklungseinheiten 1verbunden ist und mittels eines ebenfalls mit ihr verbundenen schaltbaren Magnethalters 22 an die Containergehäusewand verbindbar ist.

Die Gehäusewand des Containers 3 ist aus ferromagnetischem Stahl gefertigt.

Der Magnethalter umfasst zumindest zwei Dauermagnete und einen Hebel 2, mit welchem die relative Position und/oder Ausrichtung der beiden Dauermagnete zueinander veränderbar ist. Hierbei wird in einer ersten Drehstellung des Hebels 2 ein starker, zur Containergehäusewand hin aus dem schaltbaren Magnethalter 22 austretender Magnetfluss bewirkt und bei einer zweiten Drehstellung des Hebels ein schwächerer, zur Containergehäusewand hin aus dem schaltbaren Magnethalter 22 austretender Magnetfluss.

Auf diese Weise ist die Spannungsversorgungseinheit magnetisch lösbar befestigt an der Containergehäusewand.

Die elektronische Schaltung 21 ist über die Sekundärwicklungseinheiten 1 aus einem Primärleiter 40 berührungslos versorgt und ist als AC/AC-Spannungswandler und Spannungsanpassung wirksam, wobei der AC/AC-Spannungswandler eine AC/DC-Wandlereinheit, insbesondere Gleichrichter aufweist und einen daraus versorgten DC/AC-Wandlereinheit. Alternativ ist statt des AC/AC-Spannungswandlers auch ein AC/DC-Spannungswandler vorsehbar, wenn der Verbraucher mit Glecihstrom versorgbar ist.

Jede Sekundärwicklungseinheit 1 weist jeweils eine Sekundärwicklung auf, die vorzugswiese als Flachwicklung ausgeführt ist und deren Spulenkern aus einer U- oder E-förmig ausgeführten Ferritanordnung ausgeführt ist.

Der jeweiligen Sekundärwicklungseinheit 1 ist eine Kapazität derart in Reihe oder parallel zugeschaltet, dass die Resonanzfrequenz des so gebildeten Schwingkreises im Wesentlichen des in den Primärleiter 40 eingeprägten Wechselstromes entspricht.

Als Primärleiter 40 ist eine geschlossene langgestreckt verlegte Leiterschleife verwendet, so dass in der Nähe der jeweiligen Sekundärwicklungseinheit 1 ein Hinleiter und ein Rückleiter angeordnet sind. Die Sekundärwicklungseinheit 1 ist an den Primärleiter 40 induktiv angekoppelt.

Die somit an die Sekundärwicklungseinheit 1 vom Primärleiter 40 übertragene Leistung wird von der elektronischen Schaltung 21 angepasst und umgewandelt, so dass ausgangsseitig eine der Netzspannung entsprechende Spannungsquelle am Steckverbinderteil 30 zur Verfügung stellbar ist. Hierzu umfasst die elektronische Schaltung einen Vierpol, der eine derartige Induktivität und Kapazität aufweist, dass die zugehörige Resonanzfrequenz wiederum im Wesentlichen der Frequenz des in den Primärleiter 40 eingeprägten Wechselstromes entspricht.

Somit ist ein elektrischer Verbraucher des Containers, beispielsweise ein Kühlaggregat elektrisch versorgbar, indem dessen Gegensteckverbinderteil mit dem Steckverbinderteil 30 in Kontakt gebracht werden.

Zwischen der Sekundärwicklungseinheit 1, insbesondere der Ferritanordnung, und dem schaltbaren Magnethalter 22 ist ein Abschirmteil 20 angeordnet, so dass die Ferritanordnung vor dem Magnetfeld der Dauermagnete und somit vor Sättigung durch das Vorsehen der Dauermagnete geschützt ist, wie in Figur 3 gezeigt..

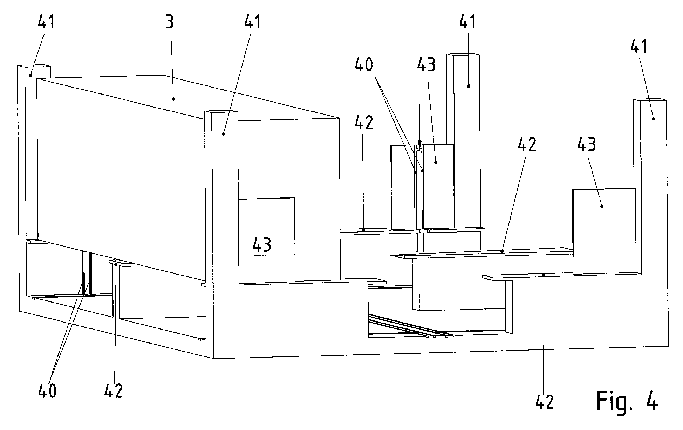

Wie in Figur 4 gezeigt, ist der Container 3 auf Auflageabschnitten 42 eines Moduls gelagert, das Tragsäulen 41 aufweist, an denen Halteabschnitte 43 angeordnet sind, die den Primärleiter 40 aufnehmen und halten.

Somit ist bei Einlagerung des Containers 3 in einen der durch das Modul vorgegebenen Lagerplätze eine induktive Ankoppelung der Spannungsversorgungseinheit ermöglicht.

Ein Steckverbinden zur Spannungsversorgung zwischen dem beweglichen Teil, also Container samt rucksackartiger Spannungsversorgungseinheit, entfällt.

Daher ist ein automatisiertes Einlagern und Auslagern der Container 3 ermöglicht, beispielsweise durch ein FTS, also fahrerloses Transportsystem, oder AGV, also automated guided vehicle.

Die Auflageabschnitte 42 sind derart hoch angeordnet, dass das FTS oder AGV unter den Container 3 fahren kann und diesen dann anheben und abtransportieren kann. Ebenso wird beim Einlagern der Container 3 auf den Auflageabschnitt 42 abgesenkt und dann das FTS oder AGV weggefahren.

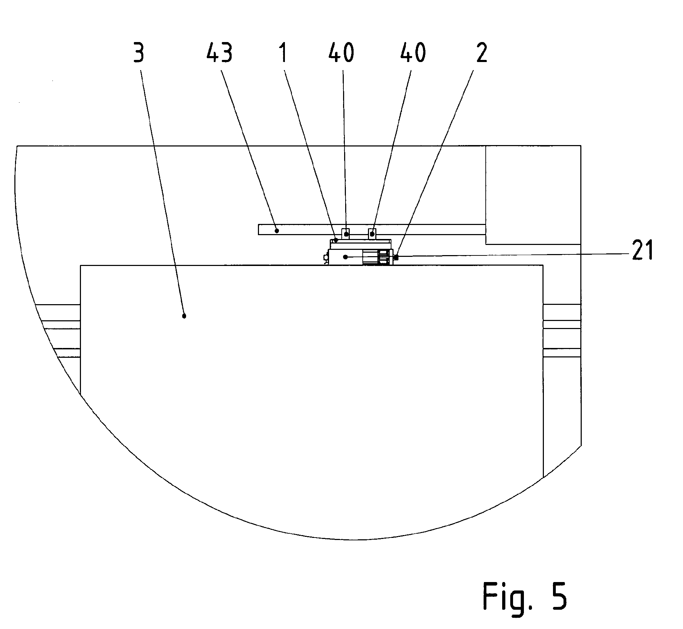

Wie in Figur 5 gezeigt, sind die Sekundärwicklungseinheiten 1 induktiv an den Primärleiter angekoppelt.

Bei einem weiteren erfindungsgemäßen Ausführungsbeispiel sind anstatt der beiden Sekundärwicklungseinheiten mehrere parallel oder in Reihe geschalteten Sekundärwicklungseinheiten vorgesehen.

Bei einem weiteren erfindungsgemäßen Ausführungsbeispiel ist nur eine einzige Sekundärwicklungseinheit vorgesehen anstatt der beiden oder mehrerer parallel oder in Reihe geschalteten.
Bei einem weiteren erfindungsgemäßen Ausführungsbeispiel wird die Spannungsversorgungseinheit an einem Halteblech befestigt, das in Ösen des Containers einrastbar ist und somti eine vollautomatische Bestückung ermöglicht.

### Bezugszeichenliste

1 Sekundärwicklungseinheit
2 Hebel
3 Container
20 Abschirmteil, insbesondere Abschirmteil
21 elektronische Schaltung, insbesondere Spannungswandler und Spannungsanpassung
22 schaltbarer Magnethalter
30 Steckverbinderteil
40 Primärleiter, insbesondere Linienleiter
41 Tragsäule
42 Auflageabschnitt
43 Halteabschnitt

## Patentansprüche

1. Lagersystem mit Objekten, insbesondere Container (3),
wobei das Lagersystem Lagerplätze für die Objekte, insbesondere für die ein- und/oder auszulagernden Objekte aufweist,
wobei an einem oder mehreren Lagerplätzen jeweils ein Primärleiter (40) angeordnet ist, insbesondere also der Primärleiter (40) stationär angeordnet ist,
wobei an wenigstens einem der Objekte eine Spannungsversorgungseinheit lösbar verbunden ist, welche
eine Sekundärwicklung (1) aufweist, die mit dem Primärleiter (40) induktiv koppelbar ist, wobei das Objekt einen elektrischen Verbraucher, insbesondere Kühlaggregat, aufweist, wobei der elektrische Verbraucher aus der Spannungsversorgungseinheit elektrisch versorgt ist,
**dadurch gekennzeichnet, dass**
die Spannungsversorgungseinheit einen betätigbaren, insbesondere schaltbaren, Magnethalter (22) aufweist,
insbesondere wobei der Magnethalter (22) zwei Dauermagnete aufweist, deren Relativposition abhängig von der Stellung eines Betätigungselements, insbesondere Schalthebels, veränderbar ist,
insbesondere so dass ein magnetisches lösbares Verbinden ausführbar ist,
wobei die Spannungsversorgungseinheit ein Abschirmteil (20) aufweist, welches zwischen der Sekundärwicklung (1) und dem Magnethalter (22) angeordnet ist und/oder welches zwischen einem Ferritkern der Sekundärwicklung (1) und dem Magnethalter (22) angeordnet ist,
wobei das Abschirmteil (20) zumindest einen Teil des vom Magnethalter (22), insbesondere von dessen Dauermagneten, ausgehenden Magnetflusses von der Sekundärwicklung (1) weglenkt oder ablenkt,
wobei das Abschirmteil (20)
- einen Ferritbereich und
- einen weiteren Bereich, der nicht magnetisch, insbesondere also amagnetisch, diamagnetisch, paramagnetisch, ist und/oder aus Kunststoff und/oder aus Aluminium gefertigt ist, aufweist,
wobei der Ferritbereich zwischen dem weiteren Bereich und dem Magnethalter (22) angeordnet ist, insbesondere also näher angeordnet ist am Magnethalter (22) als der weitere Bereich.

2. Lagersystem nach Anspruch 1,
**dadurch gekennzeichnet, dass**
der elektrische Verbraucher mittels einer Steckverbindung, insbesondere Drehstrom-Steckverbindung, insbesondere aufweisend ein Steckverbinderteil (30) und ein entsprechendes Gegensteckverbinderteil, mit der Spannungsversorgungseinheit elektrisch verbunden ist.

3. Lagersystem nach mindestens einem der vorangegangenen Ansprüche,
**dadurch gekennzeichnet, dass**
das Objekt ein Gehäuseteil aus einem ferromagnetischen Werkstoff, insbesondere Stahl, aufweist,
wobei die Spannungsversorgungseinheit am Gehäuseteil lösbar verbunden ist.

4. Lagersystem nach mindestens einem der vorangegangenen Ansprüche,
**dadurch gekennzeichnet, dass**
die Spannungsversorgungseinheit eine elektronische Schaltung (21) aufweist, welcher die in der Sekundärwicklung (1) induzierte Spannung zugeführt wird,
wobei die elektrische Schaltung (21) eine Wechselspannung, insbesondere eine einer Versorgungsnetzspannung entsprechende Wechselspannung, zur Verfügung stellt,
insbesondere wobei die Wechselspannung eine Frequenz von 50 Hz oder 60 Hz aufweist, insbesondere wobei die Wechselspannung einen Effektivwert zwischen 200 Volt und 260 Volt oder zwischen 100 Volt und 120 Volt aufweist.

5. Lagersystem nach mindestens einem der vorangegangenen Ansprüche,
**dadurch gekennzeichnet, dass**
der Lagerplatz in einem Modul angeordnet ist, insbesondere auf hierfür vorgesehenen Auflagebereichen des Moduls,
wobei das Modul einen Verfahrflächenabschnitt und darauf angeordnete Säulen aufweist, so dass ein Lager aus Modulen gleicher Art zusammensetzbar ist, indem auf Säulen eines ersten Moduls ein Verfahrflächenabschnitt eines anderen Moduls aufsetzbar ist.

6. Spannungsversorgungseinheit für ein Lagersystem nach einem der vorangegangenen Ansprüche, wobei
die Spannungsversorgungseinheit mit einem Objekt des Lagersystems mittels eines schaltbaren Magnethalters (22) der Spannungsversorgungseinheit lösbar verbindbar ist,
wobei die Spannungsversorgungseinheit eine eine Sekundärwicklung (1) und einen Spulenkern umfassende Sekundärspule aufweist, die mit einem Primärleiter (40) induktiv koppelbar ist,
wobei einer elektronischen Schaltung (21) der Spannungsversorgungseinheit die in der Sekundärwicklung (1) induzierte Spannung zugeführt wird und daraus eine Versorgungsspannung für einen elektrischen Verbraucher, insbesondere Kühlaggregat, des Objekts erzeugt wird,
wobei die Versorgungsspannung an einem Steckverbinderteil (30) der Spannungsversorgungseinheit bereit gestellt ist,
insbesondere so dass der elektrische Verbraucher aus der Spannungsversorgungseinheit elektrisch versorgbar ist,
insbesondere wobei der Magnethalter (22) zwei Dauermagnete aufweist, deren Relativposition abhängig von der Stellung eines Betätigungselements, insbesondere Schalthebels (2), veränderbar ist,
insbesondere so dass ein magnetisches lösbares Verbinden ausführbar ist,
wobei die Spannungsversorgungseinheit ein Abschirmteil (20) aufweist, welches zwischen der Sekundärwicklung (1) und dem Magnethalter (22) angeordnet ist und/oder welches zwischen einem Ferritkern der Sekundärwicklung (1) und dem Magnethalter (22) angeordnet ist,
wobei das Abschirmteil (20) zumindest einen Teil des vom Magnethalter (22), insbesondere von dessen Dauermagneten, ausgehenden Magnetflusses von der Sekundärwicklung (1) weglenkt oder ablenkt,
wobei das Abschirmteil (20)
- einen Ferritbereich und
- einen weiteren Bereich, der nicht magnetisch, insbesondere also amagnetisch, diamagnetisch, paramagnetisch, ist und/oder aus Kunststoff und/oder aus Aluminium gefertigt ist, aufweist,
wobei der Ferritbereich zwischen dem weiteren Bereich und dem Magnethalter (22) angeordnet ist, insbesondere also näher angeordnet ist am Magnethalter (22) als der weitere Bereich.

## Claims

1. Storage system with objects, in particular containers (3),
wherein the storage system has storage places for the objects, in particular for the objects to be put into and/or taken out of storage,
wherein a primary conductor (40) is arranged in each case at one or more storage places, in particular therefore the primary conductor (40) is stationarily arranged,
wherein a voltage supply unit is detachably connected to at least one of the objects, which voltage supply unit has a secondary winding (1) which can be inductively coupled with the primary conductor (40),
wherein the object has an electrical load, in particular a cooling unit,
wherein the electrical load is electrically supplied from the voltage supply unit,
**characterised in that**
the voltage supply unit has an actuatable, in particular switchable, magnet holder (22),
in particular wherein the magnet holder (22) has two permanent magnets whose relative position is variable depending on the position of an actuating element, in particular switching lever,
in particular so that a magnetic detachable connection is realisable,
wherein the voltage supply unit has a shielding part (20) which is arranged between the secondary winding (1) and the magnet holder (22)
and/or which is arranged between a ferrite core of the secondary winding (1) and the magnet holder (22),
wherein the shielding part (20) directs away or deflects from the secondary winding (1) at least part of the magnetic flux emanating from the magnet holder (22), in particular from the permanent magnet thereof,
wherein the shielding part (20) has
- a ferrite region and
- a further region, which is non-magnetic, in particular therefore amagnetic, diamagnetic, paramagnetic, and/or is made of plastic and/or of aluminium,
wherein the ferrite region is arranged between the further region and the magnet holder (22), in particular therefore is arranged closer to the magnet holder (22) than the further region.

2. Storage system according to Claim 1,
**characterised in that**
the electrical load is electrically connected to the voltage supply unit by means of a plug connection, in particular three-phase plug connection, in particular having a plug connector part (30) and a corresponding mating plug connector part.

3. Storage system according to at least one of the preceding claims,
**characterised in that**
the object has a housing part made of a ferromagnetic material, in particular steel,
wherein the voltage supply unit is detachably connected to the housing part.

4. Storage system according to at least one of the preceding claims,
**characterised in that**
the voltage supply unit has an electronic circuit (21), to which the voltage induced in the secondary winding (1) is supplied,
wherein the electronic circuit (21) provides an alternating voltage, in particular an alternating voltage corresponding to a supply network voltage,
in particular wherein the alternating voltage has a frequency of 50 Hz or 60 Hz,
in particular wherein the alternating voltage has a root-mean-square value between 200 volts and 260 volts or between 100 volts and 120 volts.

5. Storage system according to at least one of the preceding claims,
**characterised in that**
the storage place is arranged in a module, in particular on support regions of the module provided therefor,
wherein the module has a movable area section and columns arranged thereon, so that a store can be composed of modules of the same kind by virtue of the fact that on columns of a first module a movable area section of another module can be placed.

6. Voltage supply unit for a storage system according to one of the preceding claims, wherein
the voltage supply unit is detachably connectable to an object of the storage system by means of a switchable magnet holder (22) of the voltage supply unit,
wherein the voltage supply unit has a secondary winding (1) and a secondary coil encompassing a coil core, which secondary coil can be inductively coupled with a primary conductor (40),
wherein the voltage induced in the secondary winding (1) is supplied to an electronic circuit (21) of the voltage supply unit and a supply voltage for an electrical load, in particular cooling unit, of the object is generated therefrom,
wherein the supply voltage is provided to a plug connector part (30) of the voltage supply unit,
in particular so that the electrical load can be electrically supplied from the voltage supply unit,
in particular wherein the magnet holder (22) has two permanent magnets whose relative position is variable depending on the position of an actuating element, in particular switching lever (2),
in particular so that a magnetic detachable connection is realisable,
wherein the voltage supply unit has a shielding part (20) which is arranged between the secondary winding (1) and the magnet holder (22)
and/or which is arranged between a ferrite core of the secondary winding (1) and the magnet holder (22),
wherein the shielding part (20) directs away or deflects from the secondary winding (1) at least part of the magnetic flux emanating from the magnet holder (22), in particular from the permanent magnet thereof,
wherein the shielding part (20) has
- a ferrite region and
- a further region, which is non-magnetic, in particular therefore amagnetic, diamagnetic, paramagnetic, and/or is made of plastic and/or of aluminium,
wherein the ferrite region is arranged between the further region and the magnet holder (22), in particular therefore is arranged closer to the magnet holder (22) than the further region.

## Revendications

1. Système de stockage comportant des objets, en particulier des conteneurs (3),
ledit système de stockage présentant des emplacements de stockage dédiés auxdits objets, notamment aux objets devant être stockés et/ou déstockés,
un conducteur primaire (40) respectif étant installé en un ou plusieurs emplacement(s) de stockage, c'est-à-dire, en particulier, que ledit conducteur primaire (40) occupe une position stationnaire,
une unité d'alimentation en tension, raccordée amoviblement à au moins l'un desdits objets, étant munie d'un enroulement secondaire (1) pouvant être couplé par induction audit conducteur primaire (40),
ledit objet présentant un appareil électrique consommateur, notamment un groupe de refroidissement,
lequel appareil électrique consommateur étant alimenté en électricité à partir de ladite unité d'alimentation en tension,
**caractérisé par le fait que**
l'unité d'alimentation en tension est pourvue d'un porte-aimants (22) pouvant être actionné, en particulier commuté,
sachant notamment que ledit porte-aimants (22) compte deux aimants permanents dont les emplacements relatifs peuvent être modifiés en fonction de la position d'un élément d'actionnement, en particulier d'un levier sélecteur,
notamment de façon telle qu'une liaison magnétique libérable puisse être instaurée,
ladite unité d'alimentation en tension étant dotée d'une partie de blindage (20), interposée entre ledit enroulement secondaire (1) et ledit porte-aimants (22),
et/ou interposée entre ledit porte-aimants (22) et un noyau de ferrite dudit enroulement secondaire (1),
sachant que ladite partie de blindage (20) détourne ou dévie, à l'écart dudit enroulement secondaire (1), au moins une part du flux magnétique émanant dudit porte-aimants (22), en particulier des aimants permanents de ce dernier,
ladite partie de blindage (20) comprenant
- une région constituée de ferrite et
- une région additionnelle non magnétique, c'est-à-dire notamment amagnétique, diamagnétique, paramagnétique, et/ou fabriquée en matière plastique et/ou en aluminium,
ladite région en ferrite étant interposée entre ladite région additionnelle et ledit porte-aimants (22), c'est-à-dire, en particulier, dans une position plus rapprochée dudit porte-aimants (22) que ladite région additionnelle.

2. Système de stockage selon la revendication 1,
**caractérisé par le fait que**
l'appareil électrique consommateur est raccordé électriquement à l'unité d'alimentation en tension au moyen d'une connexion enfichable, notamment d'une connexion enfichable triphasée comportant, en particulier, une partie (30) de connexion enfichable et une partie complémentaire correspondante de connexion enfichable.

3. Système de stockage selon au moins l'une des revendications précédentes,
**caractérisé par le fait que**
l'objet présente une partie de boîtier en un matériau ferromagnétique, notamment en de l'acier,
l'unité d'alimentation en tension étant reliée amoviblement à ladite partie de boîtier.

4. Système de stockage selon au moins l'une des revendications précédentes,
**caractérisé par le fait que**
l'unité d'alimentation en tension est pourvue d'un circuit électronique (21) auquel est appliquée la tension induite dans l'enroulement secondaire (1),
ledit circuit électronique (21) fournissant une tension alternative, en particulier une tension alternative correspondant à une tension d'alimentation de secteur,
sachant notamment que la tension alternative présente une fréquence de 50 Hz ou de 60 Hz,
ladite tension alternative présentant, en particulier, une valeur effective comprise entre 200 volts et 260 volts, ou entre 100 volts et 120 volts.

5. Système de stockage selon au moins l'une des revendications précédentes,
**caractérisé par le fait que**
l'emplacement de stockage est situé dans un module, notamment sur des zones d'appui dudit module prévues à cet effet,
ledit module comprenant une région de surface de roulement et des colonnes disposées sur cette dernière, ce qui permet d'assembler un stock de modules de type identique en autorisant la mise en place, sur des colonnes d'un premier module, d'une région de surface de roulement d'un autre module.

6. Unité d'alimentation en tension, destinée à un système de stockage conforme à l'une des revendications précédentes,
l'unité d'alimentation en tension pouvant être reliée amoviblement à un objet dudit système de stockage, au moyen d'un porte-aimants commutable (22) de ladite unité d'alimentation en tension,
ladite unité d'alimentation en tension étant dotée d'une bobine secondaire qui comprend un enroulement secondaire (1) et un noyau, et peut être couplée par induction à un conducteur primaire (40),
sachant que la tension induite dans ledit enroulement secondaire (1) est appliquée à un circuit électronique (21) de ladite unité d'alimentation en tension et qu'il s'opère, sur cette base, la génération d'une tension d'alimentation dévolue à un appareil électrique consommateur, notamment à un groupe de refroidissement dudit objet,
ladite tension d'alimentation étant élaborée au niveau d'une partie (30) de connexion enfichable de ladite unité d'alimentation en tension,
en particulier de façon telle que ledit appareil électrique consommateur puisse être alimenté en électricité à partir de ladite unité d'alimentation en tension,
sachant notamment que ledit porte-aimants (22) compte deux aimants permanents dont les emplacements relatifs peuvent être modifiés en fonction de la position d'un élément d'actionnement, en particulier d'un levier sélecteur (2),
notamment de façon telle qu'une liaison magnétique libérable puisse être instaurée,
ladite unité d'alimentation en tension étant pourvue d'une partie de blindage (20), interposée entre ledit enroulement secondaire (1) et ledit porte-aimants (22),
et/ou interposée entre ledit porte-aimants (22) et un noyau de ferrite dudit enroulement secondaire (1),
sachant que ladite partie de blindage (20) détourne ou dévie, à l'écart dudit enroulement secondaire (1), au moins une part du flux magnétique émanant dudit porte-aimants (22), en particulier des aimants permanents de ce dernier,
ladite partie de blindage (20) comprenant
- une région constituée de ferrite et
- une région additionnelle non magnétique, c'est-à-dire notamment amagnétique, diamagnétique, paramagnétique, et/ou fabriquée en matière plastique et/ou en aluminium,
ladite région en ferrite étant interposée entre ladite région additionnelle et ledit porte-aimants (22), c'est-à-dire, en particulier, dans une position plus rapprochée dudit porte-aimants (22) que ladite région additionnelle.
